# NEUE EUROPÄISCHE PATENTSCHRIFT

(11) **EP 1 522 725 B2**
(45) Veröffentlichungstag und Bekanntmachung des Hinweises auf die Entscheidung über den Einspruch: **25.09.2019**
(45) Hinweis auf die Patenterteilung: 15.02.2012
(21) Anmeldenummer: 04027646.1
(22) Anmeldetag: 02.03.2001
(51) Int. Cl.: F03D 11/00, F03D 1/06, H02G 13/00

(54) **Windenergieanlage**
Win power installation
Éolienne

(30) Priorität: 06.05.2000 DE 10022128
(43) Veröffentlichungstag der Anmeldung: 13.04.2005
(62) Teilanmeldung aus: 01917054.7
(73) Patentinhaber: Wobben, Aloys, 26607 Aurich (DE)
(72) Erfinder: Wobben, Aloys, 26607 Aurich (DE)
(74) Vertreter: Eisenführ Speiser

(56) Entgegenhaltungen:
- EP-A- 0 707 145
- EP-A- 1 036 937
- EP-A1- 1 282 775
- WO-A1-01/86144
- WO-A1-96/07825
- DE-A- 11 195
- DE-A- 28 489
- DE-A- 4 436 197
- DE-A1- 4 436 197
- DE-C- 19 748 716
- DE-C1- 19 748 716
- GB-A- 371 471
- US-A- 4 494 009
- US-A- 4 494 009
- US-A- 5 716 193
- US-A- 5 716 193

## Beschreibung

Die Erfindung betrifft eine Windenergleanlage, Solche Windenergieanlagen modernen Typs, beispielsweise ein vom Typ E-40 oder E-66 der Firma Enercon, sind regelmäßig mit einem Blitzschutzsystem ausgestattet, welches beispielsweise aus DE 44 36 290, DE 198 26 086, DE 195 01 267, DE 44 45 899, WO 00/14405 oder WO 96/07825 bekannt ist. Aus dem nächstliegenden Stand der Technik DE 44 36197 ist eine Windenergieanlage nach dem Oberbegriff des Anspruchs 1 mit einer Blitzschutzeinrichtung bekannt.

Bei solchen wie vorbeschrieben bekannten Bützschutzsystemen kann sich dann, wenn das Rotorblatt galvanisch von der Nabe getrennt ist, das jeweilige Rotorblatt statisch aufladen. Diese elektrostatische Aufladung eines Rotorblattes entsteht durch die Luftreibung der rotierenden Rotorblätter des Rotors einer Windenergieanlage. Je nach Luftfeuchtigkeit bzw. anderer ungünstiger Witterungseinflüsse landen sich die Rotorblätter (bzw. deren Blitzschutzsysteme) schneller oder langsamer auf. Die statische Aufladung erfolgt solange, bis die Überschlagsspannung der Luftstrecke erreicht wird. Dann erfolgt der überschlag und das gesamte System bzw, die Rotorblätter entladen sich. Ein solcher Überschlag erzeugt elektromagnetische Wellen (EMV) mit einer extrem hohen Bandbreite, weil der Überschlag quasi in Form eines Impulses erfolgt, der idealerweise über eine extreme Bandbreite (idealerweise über eine unendliche Bandbreite) verfügt. Diese schlagartigen Entladungen, die nicht auf einen Blitzeinschlag wegen eines Gewitters, sondern von der elektrostatischen Aufladung der Rotoren herrührt, stören die gesamte Elektronik der Windenergieanlage, die sich im Umfeld des überschlage befindet, wie beispielsweise die Computer oder Mikroprozessoren die ein einzelnes Rotorblatt steuern und regeln. Betroffen sind aber auch andere elektronische Einrichtungen der Windenergieanlage, die sich in der Gondel oder in der Nähe der Funkenüberschlagsstrecke befinden. Durch das Aufladen der rotierenden Rotorblätter kommt es regelmäßig zu Überschlägen an der Funkenstrecke mit ebenso regelmäßigen Störungen der Elektronik, was schon zum Schutze der gesamten elektronischen Anlageeinrichtungen nicht erwünscht ist.

Es ist Aufgabe der vorliegenden Erfindung, die vorgenannten Nachteile zu vermeiden und insbesondere die Zahl der Störung an der Elektronik wegen der überschläge an der Funkenstrecke zu minimieren.

Die Aufgabe wird mittels einer Windenergieanlage mit den Merkmalen nach Anspruch 1 gelöst. Vorteilhafte Weiterbildungen sind in den Unteransprüchen beschrieben.

Die Erfindung beruht auf dem Vorschlag, die elektrostatischen Ladungen der Rotorblätter kontinuierlich zu entladen. Hierbei ist darauf zu achten, dass die Spannung an den Funkenstrecken kurz vor einem Überschlag je nach Feuchtigkeit leicht 20 bis 30 kV erreichen kann. Mithin muss die Vorrichtung zur kontinuierlichen Entladung (Entladeschaltung) der Rotorblätter im wesentlichen zwei Bedingungen erfüllen, nämlich erstens, die kontinuierliche Entladestrecke muss so niederohmig sein, dass eine statische Aufladung der Rotorblätter vermieden wird und zweitens muss sie in der Lage sein, einer Stoß-Spannung in Höhe von 30 kV und mehr zu widerstehen (solche Stoß-Spannungen stellen sich bei Blitzeinschlägen ein).

Die Erfindung wird nachfolgend anhand von zeichnerischen Darstellungen näher erläutert. In den Zeichnungen stellen dar:
- Fig. 1: eine Reihenschaltung eines ohmschen Widerstandes und einer Induktivität;
- Fig. 2: eine Ausführung der Erfindung mit fünf in Reihe geschalteten, gewickelten Drahtwiderständen;
- Fig. 3: eine Ansicht/ein Teilquerschnitt durch eine erfindungsgemäße Windenergieanlage;
- Fig. 4: eine vergrößerte Darstellung des Ausrisses III aus Fig. 3;
- Fig. 5: eine weitere vergrößerte Detailansicht aus Fig. 3; und
- Fig. 6: eine Detallansicht aus dem Bereich V in Fig, 3.

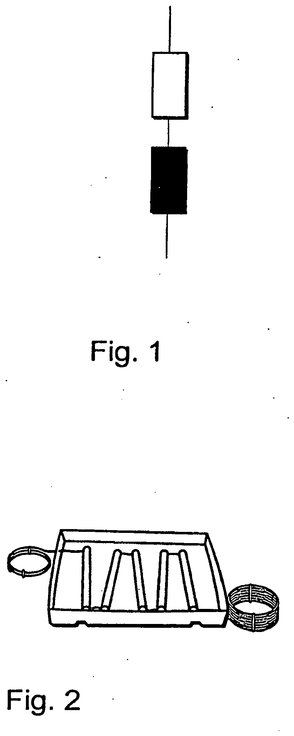

Es ist besonders zweckmäßig, wenn die Vorrichtung zur kontinuierlichen Entladung elektrostatischer Ladung der Rotorblätter aus einer Entladeschaltung besteht, die eine Reihenschaltung eines ohmschen Ableitwiderstandes und einer Induktivität aufweist. Dies ist in Figur 1 dargestellt. Hierbei weist der Ableitwiderstand vorzugsweise einen Wert von ca. 50 kΩ und die Induktivität vorzugsweise einen Wert von 10 µH oder mehr auf.

Während der statischen Entladung der Rotorblätter, ist die Induktivität nicht in Funktion, da die Ableitströme einen Gleichstrom mit sehr kleiner Amplitude darstellen. Somit ist jedes Rotorblatt für die statische Entladung mit einem Widerstand von 50 kΩ mit dem Erdpotential verbunden, wenn die in Figur 1 dargestellte Schaltung ein Rotorblatt mit dem Erdanschluss des Erdpotentials verbindet.

Im Falle eines Blitzeinschlages (aufgrund eines Gewitters) steigt die Spannung an der Funkenstrecke (die Entladungsschaltung nach Figur 1) sehr hoch an. Die Höhe der Spannung ist von dem Abstand, dem Krümmungsradius der Kontaktspitzen und der Luftfeuchtigkeit abhängig. Die Induktivität begrenzt nun den Anstieg des Stromes, der durch den statischen Ableiter (R+L) fließt. Damit ist ein ausreichender passiver Schutz für den Ableitwiderstand gegeben.

Besonders vorteilhaft ist es, wenn der ohmsche Widerstand durch ein Drahtwiderstand gebildet wird und wenn dieser gleichzeitig aufgewickelt ist, kann der ohmsche Widerstand wie auch die Induktivität sehr platzsparend gestaltet werden. Dies ist in Figur 2 der Anmeldung in einer Ansicht gezeigt. Hierbei sind fünf in Reihe geschaltete, gewickelte Drahtwiderstände dargestellt, die über entsprechende Zuleitungen verfügen.

Die Ausführung eines gewickelten Drahtwiderstandes hat den Vorteil, dass eine gleiche Spannungsverteilung über die gesamte Länge der Widerstände gegeben ist.

Ein weiterer Vorteil der erfindungsgemäßen Ausbildung besteht in der sehr einfachen Lösung, die gleichwohl einen sehr wirksamen Schutz der gesamten Elektronik der Windenergieanlage gewährleistet und eine schlagartige (stoßartige) Entladung von elektrostatischen Ladungen mit Hilfe des beschriebenen Statikableiters gewährt.

Der Statikableiter (32) (die Vorrichtung zur kontinuierlichen Entladung elektrostatischer Ladung) besteht letztlich aus einer einfachen elektrischen Impedanz mit einer ohmschen und einer induktiven Komponente und der Statikableiter (32) ist parallel zur Funkenstrecke angeordnet.

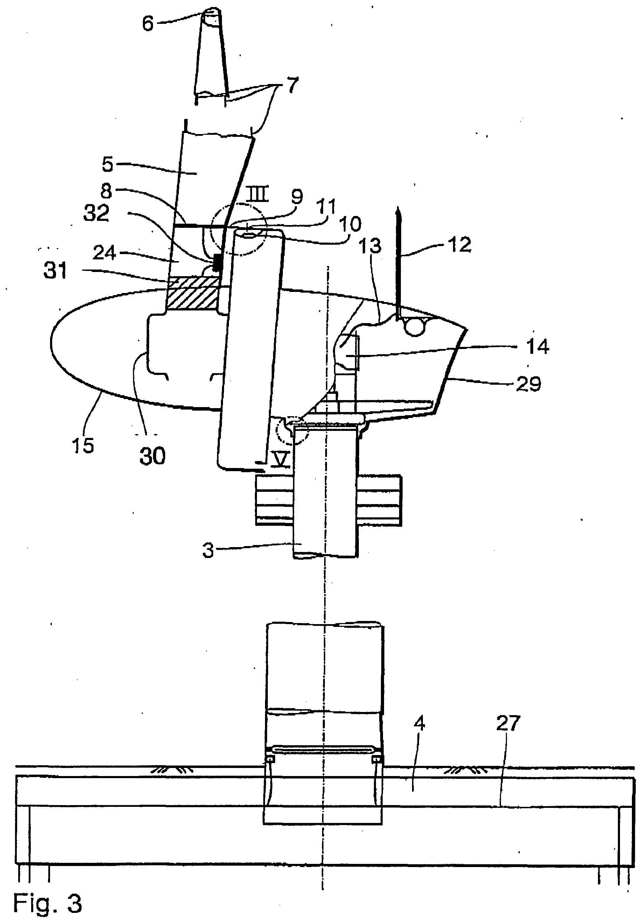

Fig. 3 zeigt die Anordnung des erfindungsgemäßen Statikableiters bei einer Windenergieanlage. Die hierbei dargestellte Windenergieanlage hat einen Maschinenträger, der eine Rotornabe (30), an der Rotorblätter angeordnet sind, sowie einen an die Rotomabe (30) gekoppelten Generator aufnimmt. Der Maschinenträger 14 ist auf einem Turm 3 um eine lotrechte Achse drehbar angeordnet. Der Turm 3 ist in einem Fundament 4 verankert. Zu dessen Übersicht ist ein Rotorblatt 5 dargestellt. Die Spitze des Rotorblattes 5 ist als Aluminiumformteil 6 ausgebildet. Auf der Rotorblattwurzel 24 ist ein die Rotorblattwurzel 24 total umlaufender Aluminiumring 8 angeordnet. Stangenförmige Leitelemente 7, die in der Vorderkante und an der Hinterkante des Rotorblatts verlaufen, verbinden das Aluminiumformteil 6 der Spitze elektrisch leitend mit dem auf der Rotorblattwurzel 24 angeordneten Aluminiumring 8.

Im Bereich der Rotorblattwurzel 24 ist auf Höhe des Aluminiumrings 8 eine Fangstange 9 als Blitzableitungsorgan angeordnet. Die Fangstange 9 ist über einen Überleitungsvorsprung 11 einem elektrisch leitenden Ableitring bis auf einen vorbestimmten Abstand, z. B. 3 mm, angenähert. Mit ihrem dem Übedeitungsvorsprung 11 abgewandten freien Ende ist die Fangstange 9 auf dem Aluminiumring 8 bis auf einen vorbestimmten, etwa gleichen Abstand angenähert.

Der geerdete Ableitring 10 ist koaxial zur Rotorwelle angeordnet. Somit ist die Annäherung des Überleitvorsprungs 11 während der vollständigen Drehung des Rotorblatts 5 gewährleistet.

Der Maschinendreher 14 wird von einer zusätzlichen Fangstange 12 überragt, die an den Maschinenträger 14 mit einer elektrisch leitenden Verbindung 13 angeschlossen ist.

Zwischen dem Aluminiumring 8 und dem Blattadapter (31) ist der Statikableiter (32) leitend angeordnet. Hierüber kann die statische Ableitung der Rotorblätter wie vorbeschrieben erfolgen.

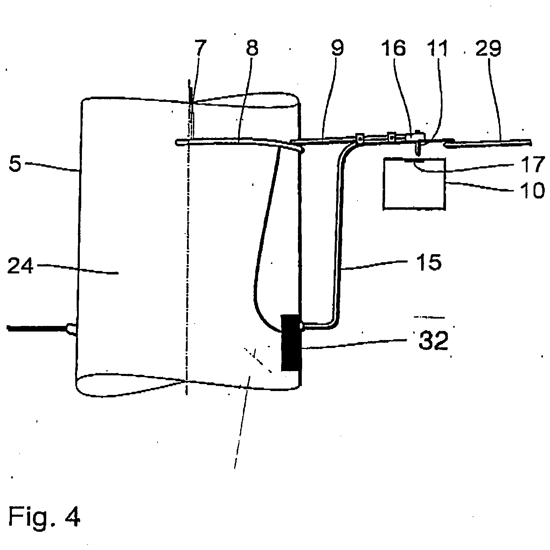

Die in Fig. 3 dargestellte Ansicht ist in vergrößerter Form nochmals in Fig. 4 gezeigt.

Hierbei ist der horizontale Aluminiumring 8 nur abschnittsweise um die Rotorblattwurzel herumgeführt. Das untere Ende des Leitelementes 7 der dargestellten Stützeinrichtung ist mit dem Aluminiumring 8 elektrisch leitend verbunden. Der elektrisch leitende Blitzableitungsweg zwischen dem Aluminiumring 8 und dem Ableitring 10 wird durch die Fangstange 9 hergestellt, die mit Schellen o.dgl. auf der Rotornabenverkleidung 15 aus elektrisch nicht leitendem Material waagerecht liegend befestigt ist und sich somit mit dem Rotorblatt 5 mitdreht. An dem dem Rotorblatt 5 abgewandten Ende der Fangstange 9 ist ein Kreuzverbinder 16 angeordnet, der die Fangstange 9 mit dem Überleitvorsprung 11 verbindet. Der Überleitvorsprung 11 ist senkrecht durch die Rotornabenverkleidung 15 hindurch dem Ableitring 10 bis auf einen bestimmten Abstand angenähert.

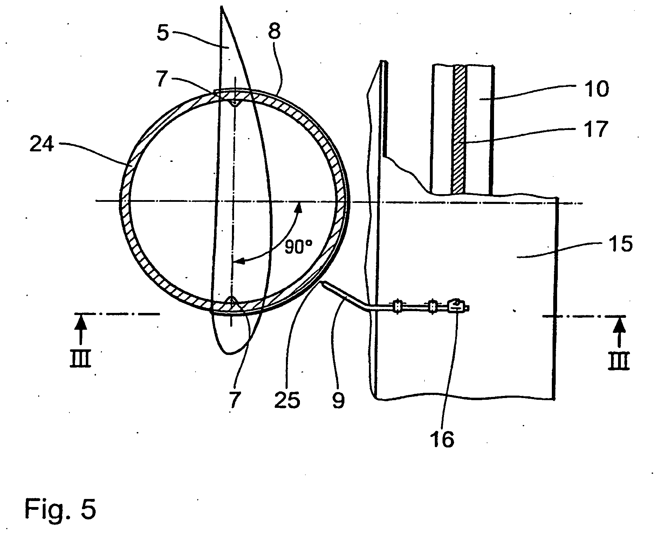

Die Darstellung in Fig. 5 verdeutlicht auch, dass der Ableitring 10 im Bereich der Annäherung des Überleitvorsprunges 11 auf Höhe des Kreuzverbinders 16 einen vorbestimmten Blitzableitungsweg 17 in Form einer geringeren Lackschichtdicke aufweist. Fig. 5 zeigt auch, dass der Aluminiumring 8 um die Rotorblattwurzel 24 halbkreisförmig herumgeführt ist, um beide Leitelemente 7 miteinander zu verbinden und um bei den möglichen Winkeleinstellungen des Rotorblattes eine elektrische Wirkverbindung zur Fangstange 9 zu gewährleisten. Die Fangstange 9 weist an ihrem dem Aluminiumring 8 bis auf einen vorbestimmten Abstand angenäherten freien Ende 25 eine die Feldstärke im Vergleich zur Umgebung erhöhende kegelförmige Spitze auf.

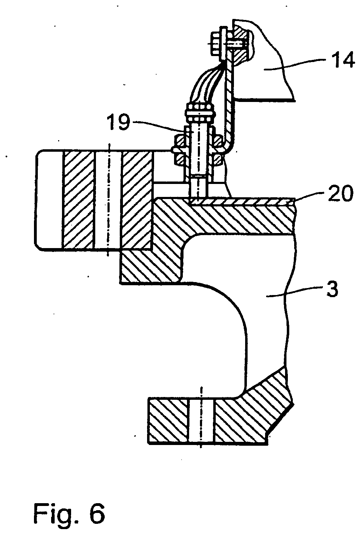

Fig. 6 zeigt eine elektrisch leitende Verbindung zwischen dem Maschinenträger 14 und dem oberen Bereich des Turms 3. In diesem Bereich des Turms 3 ist eine waagerecht liegende Reibscheibe 20 koaxial zur Drehachse des Maschinenträgers 14 angeordnet. Der Maschinenträger 14 hat in einem den Turm 3 zugekehrten Bereich ein Blitzableitungselement, das als mit einem Anpressdruck beaufschlagter Stößel 19 ausgebildet ist. Dieser Stößel 19 ist in diesem Bereich so am Maschinenträger 14 senkrecht angeordnet, dass er auf die Reibscheibe 20 drückt und somit eine elektrisch leitende Verbindung herstellt. Auch bei Drehungen des Maschinenträgers 14 bleibt diese Verbindung aufgrund der schleifenden Anlage bestehen.

Ein in die Windenergieanlage einschlagender Blitz wird folgendermaßen abgeleitet:
Ein in ein Rotorblatt 5 einschlagender Blitz wird zunächst in den Maschinenträger 14 abgeleitet. Ausgehend vom Aluminiumformteil 6 oder einem Leitelement 7 wird der Blitz über die Leitelemente 7 in den Aluminiumring 8 abgeleitet. Unabhängig vom momentanen Rotorblattwinkel wird der Blitz vom Aluminiumring 8 dann über die Fangstange 9 in den Ableitring 10 übergeleitet. Über den vorbestimmten Blitzableitungsweg 17 des Ableitringes 10 wird der Blitz über nicht dargestellte leitende Verbindungen in den Maschinenträger 14 eingeleitet.

Ein in die zusätzliche Fangstange 12 einschlagender Blitz wird über die Verbindung 13 gleichfalls in den Maschinenträger 14 eingeleitet.

Die Blitzableitung vom Maschinenträger 14 in den Turm 3 erfolgt über die sich in schleifender Anlage befindenden Stößel 19 und Reibscheibe 20. Die Blitzableitung ist somit auch unabhängig von der momentanen Drehstellung des Maschinenträgers 14 gewährleistet.

Die weitere Blitzableitung erfolgt über den Turm 3, das Fundament 4 und die in das Erdreich laufenden Ringerder 27.

Wie beschrieben, zeigt die Erfindung auf, wie einerseits in hervorragender Weise eine kontinuierliche Entladung von elektrostatischen Ladungen von einem Rotorblatt erfolgen kann, wie andererseits aber auch Blitzeinschläge im Rotorblatt abgeführt werden können, ohne Schäden an der Windenergieanlage zu verursachen. Während die elektrostatischen Ladungen über den Statikableiter und über die Nabe direkt abgeführt werden, werden Ladungen, die von einem Blitzschlag herrühren an der Nabe vorbei, insbesondere am Lager der Nabe vorbei abgeführt. Die Leitungen für elektrostatische Ladungen wie auch Blitzströme von der Rotorblattspitze bis zum Blattwurzelbereich können die gleichen sein. Zum Schutz der Windenergieanlage muss aber dafür gesorgt werden, dass Blitzeinschläge nicht über die Nabe bzw. die Lager der Nabe geführt werden.

Die Auftrennung der verschiedenen Ladungswege für die elektrostatische Ladung einerseits und Blitzströme andererseits ist äußerst effektiv und konnte bei Windenergieanlagen sehr erfolgreich getestet werden. Der Aufwand ist insgesamt gering.

Mit der Erfindung ist es möglich, dass Störungen, die einerseits von der elektrostatischen Aufladung der Rotorblätter herrühren könnten oder auch vom Blitzeinschlag, deutlich verringert werden können. Die besondere Kombination aus der Ableitung elektrostatischer Ströme und der Blitzströme über unterschiedliche Leitungswege hat sich bei mehreren Anlagen als überaus erfolgreich bewiesen.

## Patentansprüche

1. Windenergieanlage mit einem Maschinenträger, der auf einem als Turm ausgebildeten Unterbau drehbar angeordnet ist, mit einer auf dem Maschinenträger (14) gelagerten Rotorwelle mit einer Rotornabe (30) und mit mindestens einem Rotorblatt (5) und **gekennzeichnet durch** eine Vorrichtung (32) zur kontinuierlichen Entladung elektrostatischer Ladung von wenigstens einem Rotorblatt (5) der Windenergieanlage und dass die Vorrichtung (32) zur kontinuierlichen Entladung der elektrostatischen Ladung einerseits mit dem elektrischen Blitzableiteranschluss (8) des Rotorblattes (5) und andererseits mit dem Anschluss am Blattadapter des Rotorblattes (5) elektrisch verbunden ist, dass Ladungen, die über die Vorrichtung zur kontinuierlichen Entladung elektrostatischer Ladung abgeführt werden, über die Nabe (30) der Windenergieanlage abgeführt werden, ein jedes Rotorblatt (5) an seiner Spitze und in einem Isolations-Abstand zur Rotornabe (30) auf seiner Rotorblattwurzel (24) angeordnete, elektrische Leitelemente aufweist, die miteinander elektrisch leitend verbunden sind, dass in der Vorderkante und in der Hinterkante jedes Rotorblatts (5) elektrische Leitelemente (7) angeordnet sind, welche an die Spitze des Rotorblattes und auf seiner Rotorblattwurzel angeordneten Leitelemente elektrisch leitend verbinden, und dass die Windenergieanlage eine Blitzschutzreinrichtung mit einem Blitzableitungsorgan aufweist und dass im Bereich der Rotorblattnabe (30) die elektrostatischen Ladungen über einen anderen Weg abgeführt werden als bei einen Blitz eingeprägte Ladungen, wobei die elektrostatischen Ladungen über die Nabe (30) und die beim Blitz eingeprägten Ladungen an der Nabe (30) vorbei abgeführt werden.

2. Windenergieanlage nach Anspruch 1,
**dadurch gekennzeichnet, dass** die Vorrichtung (32) zur kontinuierlichen Entladung aus einer Reihenschaltung eines ohmschen Widerstandes und eine Induktivität besteht und die Schaltung elektrisch das Rotorblatt mit einem Erdungsanschluss verbindet.

3. Windenergieanlage nach Anspruch 1 oder 2,
**dadurch gekennzeichnet, dass** die Vorrichtung (32) zur kontinuierlichen Entladung parallel zu einer Funkenstrecke eines Blitzschutzsystems der Windenergieanlage geschaltet ist.

4. Windenergieanlage nach Anspruch 2,
**dadurch gekennzeichnet, dass** der ohmsche Widerstand ein Widerstand von wenigstens 10 kΩ, vorzugsweise 50kΩ aufweist.

5. Windenergieanlage nach Anspruch 2,
**dadurch gekennzeichnet, dass** die Induktivität wenigstens 2µH, vorzugsweise größer als 10 µH ist.

6. Windenergieanlage nach Anspruch 2,
**dadurch gekennzeichnet, dass** die Induktivität aus einem gewickelten Drahtwiderstand besteht.

7. Windenergieanlage nach Anspruch 2,
**dadurch gekennzeichnet, dass** der ohmsche Widerstand aus einem Drahtwiderstand besteht.

8. Windenergieanlage nach einem der vorhergehenden Ansprüche,
**gekennzeichnet durch** eine Blitzschutzüberleitung von
den Rotorblättern zu einem feststehenden, elektrisch leitenden Bauteil des Maschinenträgers, der geerdet ist, wobei die Blitzschutzüberleitung als ein im Bereich der Rotorblattwurzel (24) in einem Isolations-Abstand zur Rotornabe (30) angeordnetes, mit der Rotorblattwurzel (24) in elektrischer Wirkverbindung stehendes Blitzableitungsorgan ausgebildet ist, das einen Überleitungsvorsprung (11) aufweist, der dem feststehenden, elektrisch leitenden Bauteil des Maschinenträgers (14) bis auf einen vorbestimmten Abstand angenähert ist.

9. Windenergieanlage nach Anspruch 8,
**dadurch gekennzeichnet, dass** das Blitzableitungsorgan eine Fangstange (9) ist.

10. Windenergieanlage nach Anspruch 8 oder 9,
**dadurch gekennzeichnet, dass** das feststehende, elektrisch leitende Bauteil des Maschinenträgers (14) ein koaxial zur Rotorwelle angeordneter Ableitring (10) ist und dass dieser in seinem dem Überleitungsvorsprung (11) zugekehrten Bereich einen vorbestimmten Blitzableitungsweg (17) aufweist.

11. Windenergieanlage nach Anspruch 9,
**dadurch gekennzeichnet, dass** die Fangstange (9) mit ihrem dem Überleitungsvorsprung (11) abgewandten freien Ende (25) einem auf der Rotorblattwurzel (24) angeordneten, elektrischen Leitelement bis auf einen vorbestimmten Abstand angenähert ist.

12. Windenergieanlage nach Anspruch 1,
**dadurch gekennzeichnet, dass** das an der Spitze des Rotorblattes (5) angeordnete Leitelement als Aluminiumformteil (6) ausgebildet ist.

13. Windenergieanlage nach einem der Ansprüche 11 oder 12,
**dadurch gekennzeichnet, dass** das auf der Rotorblattwurzel (24) angeordnete Leitelement ein auf der Oberfläche der Rotorblattwurzel (24) mindestens abschnittsweise
horizontal umlaufender Aluminiumring (8) ist.

14. Windenergieanlage, nach einem der vorherigen Ansprüche,
**dadurch gekennzeichnet, dass** in einem Bereich des Maschinenträgers (14), der dem Unterbau zugekehrt ist, ein Blitzableitungselement angeordnet ist, das sich mit einem elektrisch leitenden Bauelement des Unterbaus in schleifender Anlage befindet.

15. Windenergieanlage nach Anspruch 14,
**dadurch gekennzeichnet, dass** das Blitzableitungselement als ein mit einem Anpreßdruck beaufschlagter Stößel (19) ausgebildet ist.

16. Windenergieanlage nach Anspruch 14 oder 15,
**dadurch gekennzeichnet, dass** das elektrisch leitende Bauelement des Unterbaus eine Reibscheibe (20) ist, die im oberen Bereich des Unterbaus in einer waagerechten Ebene und koaxial zur Drehachse des Maschinenträgers (14) liegend angeordnet ist.

17. Windenergieanlage nach einem der vorherigen Ansprüche,
**dadurch gekennzeichnet, dass** das Rotorblatt (5) aus einem elektrischen Nichtleitermaterial
wie beispielsweise glasfaserverstärktem Kunststoff besteht.

## Claims

1. Wind energy installation having a machine mount which is arranged on a foundation, in the form of a tower, such that it can rotate, having a rotor shaft which is mounted on the machine mount (14) and has a rotor hub (30) and has at least one rotor blade (5) and **characterized by** an apparatus (32) for continuous discharging of electrostatic charge from at least one rotor blade (5) of the wind energy installation and in that the apparatus (32) for continuous discharging of the electrostatic charge is electrically connected on one side to the electrical lightning conductor connection (8) for the rotor blade (5), and on the other side to the connection on the blade adapter of the rotor blade (5), in that charges which are dissipated via the apparatus for continuous discharging of electrostatic charge are dissipated via the hub (30) of the wind energy installation, each rotor blade (5), at its tip and separated by an isolation distance from the rotor hub (30), has electrically conductive elements which are arranged on its rotor blade root (24) and are electrically conductively connected to one another, in that electrically conductive elements (7) are arranged in the leading edge and in the trailing edge of each rotor blade (5) and electrically conductively connect the conductive elements which are arranged at the tip of the rotor blade and on its rotor blade root, and in that the wind energy installation has a lightning protection device having a lightning dissipation element, and in that the electrostatic charges are dissipated via a different path in the area of the rotor blade hub (30) than charges which occur in the event of a lightning strike, with the electrostatic charges being dissipated via the hub (30), while charges that occur as a result of the lightning strike are dissipated such that they bypass the hub (30).

2. Wind energy installation according to Claim 1, **characterized in that** the apparatus (32) for continuous discharging comprises an ohmic resistance and an inductance connected in series, and the circuit electrically connects the rotor blade to an earthing connection.

3. Wind energy installation according to Claim 1 or 2, **characterized in that** the apparatus (32) for continuous discharging is connected in parallel with a spark gap in a lightning protection system for the wind energy installation.

4. Wind energy installation according to Claim 2, **characterized in that** the ohmic resistance has a resistance of at least 10 kΩ, and is preferably 50 kΩ.

5. Wind energy installation according to Claim 2, **characterized in that** the inductance is at least 2 µH, and is preferably more than 10 µH.

6. Wind energy installation according to Claim 2, **characterized in that** the inductance is formed by a wound wire resistance.

7. Wind energy installation according to Claim 2, **characterized in that** the ohmic resistance is formed from a wire resistance.

8. Wind energy installation according to one of the preceding claims, **characterized by** a lightning conductor from the rotor blades to a fixed, electrically conductive component of the machine mount which is earthed, with the lightning conductor being formed by a lightning dissipation element which is arranged in the area of the rotor blade root (24), separated by an isolation distance from the rotor hub (30), is electrically operatively connected to the rotor blade root (24) and has a lightning conductor projection (11) which is at a predetermined distance from the fixed, electrically conductive component of the machine mount (14).

9. Wind energy installation according to Claim 8, **characterized in that** the lightning dissipation element is an air termination rod (9).

10. Wind energy installation according to Claim 8 or 9, **characterized in that** the fixed, electrically conductive component of the machine mount (14) is a dissipation ring (10) which is arranged coaxially with respect to the rotor shaft, and **in that** this dissipation ring (10) has a predetermined lightning dissipation path (17) in its area facing the lightning conductor projection (11).

11. Wind energy installation according to Claim 9, **characterized in that** the free end (25) of the air termination rod (9) facing away from the lightning conductor projection (11) is at a predetermined distance from an electrically conductive element arranged on the rotor blade root (24).

12. Wind energy installation according to Claim 1, **characterized in that** the conductive element which is arranged at the tip of the rotor blade (5) is an aluminium moulding (6).

13. Wind energy installation according to one of Claims 11 and 12, **characterized in that** the conductive element which is arranged on the rotor blade root (24) is an aluminium ring (8) which extends horizontally, at least in places, on the surface of the rotor blade root (24) .

14. Wind energy installation according to one of the preceding claims, **characterized in that** a lightning conductor element is arranged in an area of the machine mount (14) facing the foundation and makes a sliding contact with an electrically conductive component on the foundation.

15. Wind energy installation according to Claim 14, **characterized in that** the lightning dissipation element is a plunger (19) to which a contact pressure is applied.

16. Wind energy installation according to Claim 14 or 15, **characterized in that** the electrically conductive component on the foundation is a friction disc (20), which is arranged lying on a horizontal plane, and coaxially with respect to the rotation axis of the machine mount (14), in the upper area of the foundation.

17. Wind energy installation according to one of the preceding claims, **characterized in that** the rotor blade (5) is composed of an electrically non-conductive material, such as glass-fibre-reinforced plastic.

## Revendications

1. Eolienne avec un support de machine, qui est agencé en rotation sur un soubassement réalisé en tant que tour, avec un arbre de rotor logé sur le support de machine (14) avec un moyeu de rotor (30) et avec au moins une pale de rotor (5) et **caractérisée par** un dispositif (32) de décharge continue de charge électrostatique d'au moins une pale de rotor (5) de l'éolienne et que le dispositif (32) de décharge continue de charge électrostatique est relié électriquement d'un côté au raccord de transporteur de foudre électrique (8) de la pale de rotor (5) et d'un autre côté au raccord au niveau de l'adaptateur de pale de la pale de rotor (5), que des charges, qui sont évacuées par le biais du dispositif de décharge continue de charge électrostatique, sont évacuées par le biais du moyeu (30) de l'éolienne, chaque pale de rotor (5) présente des éléments conducteurs électriques agencés au niveau de sa pointe et à une distance d'isolement par rapport au moyeu de rotor (30) sur sa racine de pale de rotor (24), qui sont reliés de manière électriquement conductrice l'un à l'autre, que des éléments conducteurs électriques (7) sont agencés dans l'arête avant et dans l'arête arrière de chaque pale de rotor (5), lesquels relient de manière électriquement conductrice des éléments conducteurs agencés au niveau de la pointe de la pale de rotor et sur sa racine de pale de rotor, et que l'éolienne présente un dispositif de protection contre la foudre avec un organe de transport de foudre et que, dans la zone du moyeu de pale de rotor (30), les charges électrostatiques sont évacuées par le biais d'une autre voie en tant que charges marquées lors d'une foudre, dans laquelle les charges électrostatiques sont évacuées par le biais du moyeu (30) et les charges marquées lors de la foudre sont évacuées devant le moyeu (30).

2. Eolienne selon la revendication 1,
**caractérisée en ce que** le dispositif (32) de décharge continue se compose d'un circuit série d'une résistance ohmique et d'une inductance et le circuit relie électriquement la pale de rotor à un raccord de mise à la terre.

3. Eolienne selon la revendication 1 ou 2,
**caractérisée en ce que** le dispositif (32) de décharge continue est connecté parallèlement à un éclateur d'un système de protection contre la foudre de l'éolienne.

4. Eolienne selon la revendication 2,
**caractérisée en ce que** la résistance ohmique présente une résistance d'au moins 10 kΩ, de préférence 50 kΩ.

5. Eolienne selon la revendication 2,
**caractérisée en ce que** l'inductance est d'au moins 2 µH, de préférence supérieure à 10 µH.

6. Eolienne selon la revendication 2,
**caractérisée en ce que** l'inductance se compose d'une résistance bobinée.

7. Eolienne selon la revendication 2,
**caractérisée en ce que** la résistance ohmique se compose d'une résistance bobinée.

8. Eolienne selon l'une quelconque des revendications précédentes,
**caractérisée par** une conduite de transfert de protection contre la foudre des pales de rotor à un composant fixe, électriquement conducteur du support de machine, qui est mis à la terre, dans laquelle la conduite de transfert de protection contre la foudre est réalisée en tant qu'organe de transport de foudre en liaison électrique active avec la racine de pale de rotor (24), agencé dans la zone de la racine de pale de rotor (24) à une distance d'isolement par rapport au moyeu de rotor (30), qui présente une saillie de conduite de transfert (11), qui est rapproché du composant fixe électriquement conducteur du support de machine (14) jusqu'à une distance prédéterminée.

9. Eolienne selon la revendication 8,
**caractérisée en ce que** l'organe de transport de foudre est une tige de collecte (9).

10. Eolienne selon la revendication 8 ou 9,
**caractérisée en ce que** le composant fixe électriquement conducteur du support de machine (14) présente un anneau de transfert (10) agencé coaxialement à l'arbre de rotor et que celui-ci présente, dans sa zone tournée vers la saillie de conduite de transfert (11), une voie de transport de foudre prédéterminée (17).

11. Eolienne selon la revendication 9,
**caractérisée en ce que** la tige de collecte (9) avec son extrémité libre (25) opposée à la saillie de conduite de transfert (11) est rapprochée d'un élément conducteur électrique agencé sur la racine de pale de rotor (24) jusqu'à une distance prédéterminée.

12. Eolienne selon la revendication 1,
**caractérisée en ce que** l'élément conducteur agencé au niveau de la pointe de la pale de rotor (5) est réalisé en tant qu'élément moulé en aluminium (6).

13. Eolienne selon l'une quelconque des revendications 11 ou 12,
**caractérisée en ce que** l'élément conducteur agencé sur la racine de pale de rotor (24) est un anneau en aluminium (8) entourant horizontalement au moins par section sur la surface de la racine de pale de rotor (24).

14. Eolienne, selon l'une quelconque des revendications précédentes,
**caractérisée en ce qu'**un élément de transport de foudre, qui se trouve en appui par frottement avec un composant électriquement conducteur du soubassement, est agencé dans une zone du support de machine (14), qui est tournée vers le soubassement.

15. Eolienne selon la revendication 14,
**caractérisée en ce que** l'élément de transport de foudre est réalisé en tant que poussoir (19) sollicité avec une pression de contact.

16. Eolienne selon la revendication 14 ou 15,
**caractérisée en ce que** le composant électriquement conducteur du soubassement est un disque de friction (20), qui est agencé couché dans la zone supérieure du soubassement dans un plan horizontal et coaxialement à l'axe de rotation du support de machine (14).

17. Eolienne, selon l'une quelconque des revendications précédentes,
**caractérisée en ce que** la pale de rotor (5) se compose d'un matériau non conducteur électrique tel par exemple un plastique renforcé de fibres de verre.
